# EUROPEAN PATENT SPECIFICATION

(11) **EP 1 955 749 B1**
(45) Date of publication and mention of the grant of the patent: **17.03.2010**
(21) Application number: 07100935.1
(22) Date of filing: 22.01.2007
(51) Int. Cl.: B01D 11/02, G01N 1/44, G01N 25/14, B01D 1/00, B01D 3/10, B01D 3/42, B01D 5/00

(54) **Microwave hydrodiffusion for isolation of natural products**
Mikrowellen-Hydrodiffusion zur Isolierung von Naturprodukten
Hydrodiffusion par micro-ondes pour l'isolation de produits naturels

(43) Date of publication of application: 13.08.2008
(73) Proprietor: Milestone S.r.l., 24010 Sorisole (BG) (IT); Universite D'Avignon et Des Pays Du Vaucluse, 84029 Avignon Cedex 1 (FR)
(72) Inventor: Chemat, Farid Université d'Avignon et des Pays de Vaucluse, 84029, Avignon Cedex 1 (FR); Vian, Maryline Université d'Avignon et des Pays de Vaucluse, 84029, Avignon Cedex (FR); Visinoni, Franco, 24010, Sorisole (BG) (IT)
(74) Representative: Rupp, Christian

(56) References cited:
- WO-A-97/44109
- WO-A-99/31315
- GB-A- 823 545
- US-A- 5 447 077
- US-A- 5 711 857
- US-A- 5 843 311

## Description

### Field of the invention

The present invention relates to a process for the isolation of natural products by microwaves. More specifically, the process uses microwaves for hydrodiffusion of biochemical compounds from biological material to the exterior of such biological material and earth gravity to collect and separate them. The invention also relates to an apparatus for carrying out said method and to a system for carrying out said method continuously.

### Background of the invention

The isolation methods known in the art for isolating natural products are generally based on distillation, i.e. the *in situ* vaporization of the desired compound, and/or the use of organic solvents.

Recently, new methods based on the use of microwaves for extraction of natural products have been developed. For instance, a microwave assisted process (MAP) achieves the isolation of extracts or concretes by solvent extraction under microwave irradiation. The MAP extraction process, described for instance in EP 0398798 and in US 5,002,784, consists in immersing the raw material to be extracted in a solvent, the solvent being selected for its ability to dissolve the sought compounds and for its transparency to microwaves. Upon microwave irradiation, the temperature difference between the solvent and the target compound forces the compound into the solvent. The resulting solution is then separated from the raw material and processing eventually leads to the removal of the target compound.

Another process for microwave extraction of natural products is described for instance in US 7,001,629 B1. This process is referred to in the art as vacuum microwave hydrodistillation (VMHD). The process essentially consists in isolating essential oils from biological products by subjecting said biological product to microwaves under vacuum. The combined effect of selective heating by microwaves and the vacuum pressure in the extraction chamber causes the essential oil to vaporize with the biological water present in the biological material being extracted. The vapor is then condensed and collected. A limitation of this process is that it only allows isolation of compounds which are distillable, in particular essential oils.

The above-mentioned processes thus present limitations in terms of solvent choice, ease of method, and also in terms of the extracts obtainable by these methods.

WO 97/44109 A discloses an apparatus for isolating natural products from biological material comprising a microwave oven comprising a flask for containing the biological material said flask having a filter and one opening facing downwards such that the filter is above the opening, the microwave oven being such that an opening on its lower side allows the opening of the flask to extend from inside the oven to the outside.

GB 823 545 A discloses an apparatus for continuous isolation of natural products from biological material by microwave irradiation comprising a feed-through comprising an active transport mechanism for transporting the biological material through a zone comprising a microwave generator. The feed-through has a main body having a lower surface which is permeable to the isolates of the biologtical material.

### Object of the invention

In view of the above, there thus still remains a need to provide an improved process for the isolation of natural products which overcomes at least some of the limitations of the known methods.

### Summary of the invention

Accordingly, this is achieved by the features of the independent claims. The dependent claims further develop the central idea of the invention.

Thus, in a first aspect, the present invention relates to a method according to claim 1.

In a second aspect, the present invention pertains to an apparatus according to claim 12.

Finally, the invention provides a continuous system according to claim 20.

### Figures

The present invention is further described hereinafter with reference to some of its embodiments shown in the accompanying figures in which:
- Figure 1a, 1b and 1c depict embodiments of an isolation apparatus according to the present invention, and
- Figure 2 depicts a system for the continuous isolation of natural products according to the present invention.

### Detailed description of the invention

In the following, the term "biological material" is intended to cover any natural source such as plants, spices, food products, seeds etc.

The term "natural product" is intended to cover any biochemical material which is obtainable from said biological material. The isolates referred to in the present description are thus natural products.

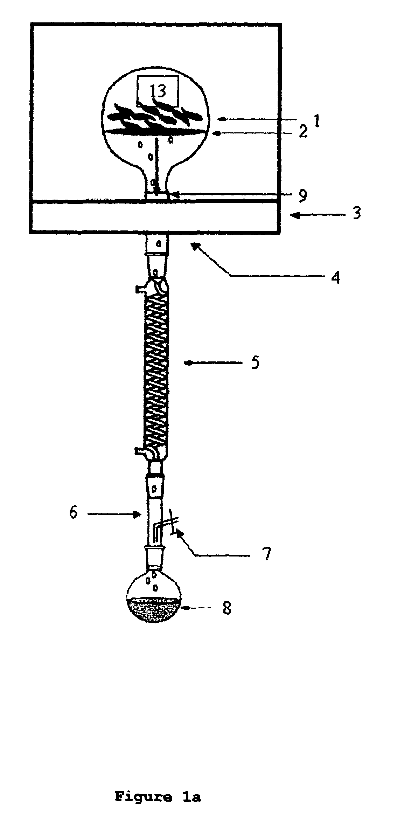

Referring to figure 1a, an installation for the isolation of natural products from a biological material is shown schematically. Such apparatus comprises a microwave oven (3) comprising a flask (1) for containing the biological material.

The microwave oven (3) may be any microwave used commonly in the art. For instance, it may be a Milestone ETHOS microwave oven. Preferably, it is a multi mode microwave reactor having a twin magnetron (2x 800W, 2455 MHz) with a maximum delivered power of 1000W variable in 10W increments.

The flask (1) for containing the biological material may be any flask suited for microwave reactions. Preferably, the flask is a traditional glass round-bottom flask. The flask (1) is provided with a filter (2) and at least one opening facing downwards (9) such that the filter is above said opening.

The filter is chosen such that it is permeable to the isolates of the biological material. Typically, the filter is in the form of a perforated disc. Preferably, it is a micropore filter.

The microwave oven is such that it contains an opening (4) on its lower side such that it allows the opening of the flask (9) to extend from inside the oven to outside. Thus, the flask (1) may extend outside the microwave oven and may be connected to a receiving flask (8) for collecting the isolates of the biological material. The receiving flask may be any recipient used in the art. It may also be a separating funnel. This is advantageously used when the isolates collected are water insoluble and thus easily separable. Such isolates are, for example, essential oils.

In the embodiment shown in figure 1a, a cooling system (5) may be placed in between flask (1) and the receiving flask (8). The cooling system may be any system used in the art, for example a water or air condenser. The apparatus shown in figure 1a further comprises a connector (6) placed above the receiving flask (8). The connector is provided with a side opening comprising a valve (7).

When the valve is open, the whole apparatus is under atmospheric pressure. Alternatively, the valve may be open and the opening may be connected to a vacuum pump. This allows to set the apparatus under vacuum pressure. This is of particular interest when the compound to be isolated is sensitive to high temperatures which may be caused by microwave irradiation.

The biological material according to the invention may be dry or may contain some moisture. If the material is dry, steam is preferably brought in contact with the material. The steam may be produced by an *in situ* steam generator, or by an external steam generator. Preferably, the steam is produced by an *in situ* steam generator which may be selected from cotton, water etc.

Figure 1a shows an embodiment of an apparatus according to the present invention wherein a steam generator (13) is placed in the flask (1) containing the biological material. Thus, the steam generated is in immediate contact with the biological material, thus facilitating the hydrodiffusion of compounds contained in the biological material.

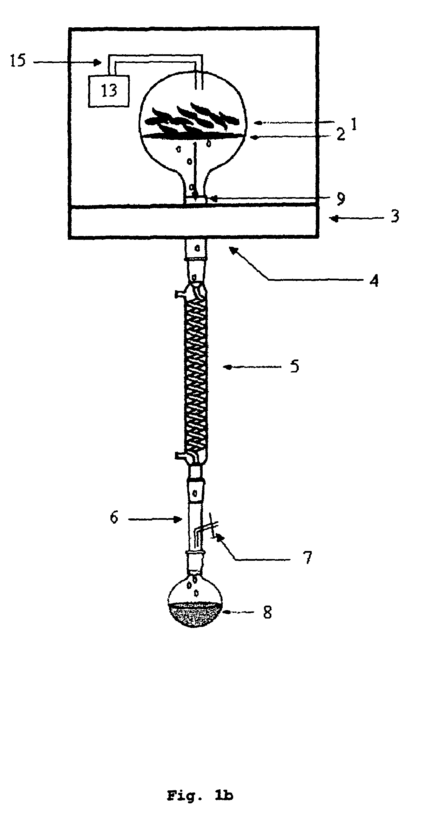

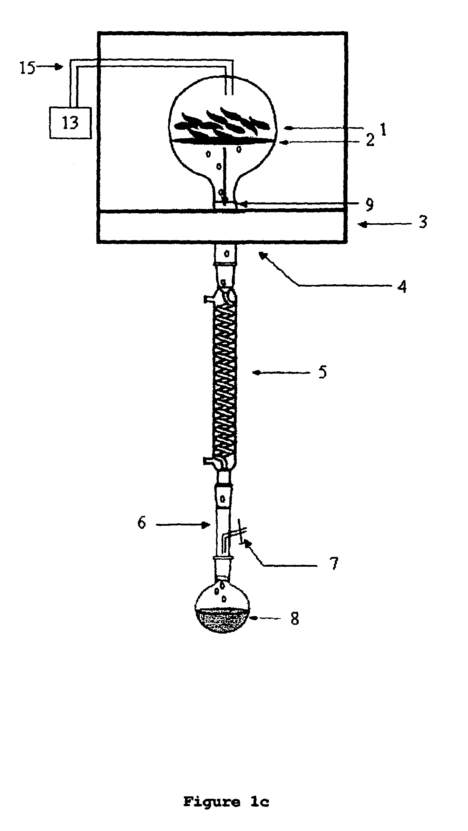

According to another embodiment shown in figure 1b, the steam generator (13) may be placed outside the flask (1) and connected to the flask via a connecting tube (15). The steam generator (13) may be placed in the microwave cavity (3) as shown in figure 1b or may be placed externally from the cavity as shown in figure 1c. When placed externally, the steam generator may be an external electric steam generator.

According to a preferred embodiment, the *in situ* steam generator may be selected from cotton or water. When cotton is used as the *in situ* steam generator, the cotton is preferably wrapped in a compress. Under the effects of microwaves, the cotton material releases steam which aids the extraction of dried biological materials. Alternatively, water may be placed in a flask, such that upon microwave irradiation, steam is generated and brought in contact with the biological material.

Using the apparatus of the invention, a method for isolating natural products from biological materials may be carried out. Such method is part of the invention and is described in the following.

According to the present invention, the method for isolating natural products from biological material comprises the steps of subjecting the biological material to microwave irradiation in a microwave oven and allowing isolates of said biological material to drop by gravity out of the microwave oven. The isolates obtainable by said method are thus natural products of said biological material. Preferably, the isolation method is carried out by hydrodiffusion.

As shown in figure 1a, the biological material is therefore placed in a flask (1), preferably on a filter (2). The filter is typically a micropore filter which is permeable to the crude isolates.

In the present invention, the biological material may be selected from plants, spices, food products, seeds etc. It may be dry or may contain moisture.

The flask (1) containing the biological material is then subjected to microwave irradiation. The direct interaction of microwaves with biological water (i.e. steam produced from the water present in the fresh biological material) or with generated steam favours the release of compounds trapped inside the cells of the biological material, such as plant tissues, for example. These compounds thus move naturally by diffusion out of the cells of the biological material and, under the effect of earth gravity tend to move downwards, through the filter (2), and into a receiving flask (8).

Without being bound by theory, the principle of the present invention is based on the diffusion of biochemical compounds from the cells of the biological material (e.g. plants) to the outside. Gravity is then used to collect the isolates. In this way, compounds isolated by the method of the invention are richer, denser, of a superior aromatic bounty. They may also be enriched by non-distillable compounds such as heavy molecules like colorants, antioxidants (polyphenols, carotenoids), antimicrobials etc. The invention thus provides a great advantage over extraction methods of the art, whereby only distillable compounds are obtainable.

According to an embodiment of the present method, the crude natural product which has diffused out of the biological material, may also contain steam resulting from the biological water present in the biological material. The crude natural products and steam thus pass through the filter and fall down by gravity through a condenser (5) which is connected to a receiving flask (8). The presence of the condenser (5) accelerates the collection step of the present invention. The crude isolates obtained in the receiving flask (8) may then be further processed.

In the case of natural products which are miscible in water such as, for example, antioxidants, phytochemicals, colorants etc., the condensate may be further treated by extraction techniques known in the art. These include liquid-liquid extraction, solid-phase extraction or other extraction techniques known in the field. This processing presents the advantage that the natural products are further purified and/or enriched.

In the case of natural products which are poorly watersoluble, such as essential oils for example, the receiving flask (8) is preferably a separating funnel. In this way, the oily condensate is collected continuously and the essential oil can then be easily separated from the water.

The present invention offers a wide usability. Indeed, the biological materials which can be processed may be selected from plants, spices, food products, seeds etc. They may be dry or may contain moisture.

The natural products obtained may also vary and belong to a wide range of different compounds such as antioxidants, phytochemicals, colorants, essential oils, antimicrobials, vitamins etc.

The process of the present invention can be performed at atmospheric pressure, reduced pressure or even under pressure. Furthermore, the pressure may be kept constant throughout the isolation process or may be varied. Typically, the temperature of isolation is between 40°C and 200°C, preferably between 50°C and 100°C. Performing the method of the invention under vacuum pressure allows the hydrodiffusion to occur at lower temperature, and is thus particularly useful in isolating thermolabile products. Accordingly, the present method offers a wide scope of applications.

During the method of the invention, time, temperature, pressure and power can be monitored or controlled. This is typically achieved with an "easy wave" software package, for example. The temperature can also be monitored during the method of the invention with the aid of a shielded thermocouple (ATC-300) which may be inserted directly into a flask (1).

The present invention further presents the advantage that no organic solvent or water is needed to perform the isolation. Furthermore, the present method provides a rapid, efficient, energy saving, and an environmental friendly way in which compounds of use for food, pharmaceuticals, cosmetic industries etc. can be obtained.

According to a further embodiment of the present invention, a system for the continuous isolation of natural product from biological material by microwave irradiation is also provided.

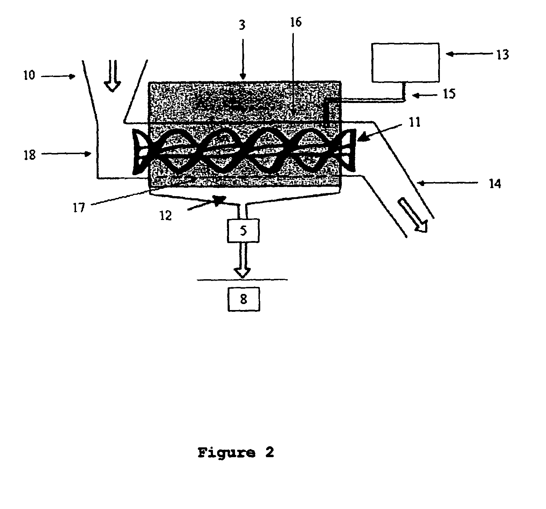

Referring to figure 2, the system comprises a feed-through (18) for transporting the biological material through a microwave oven (3). The feed-through typically has a main body (16) having a lower surface (17) which, in the microwave oven (3), is permeable to the isolates of said biological material. Preferably, the lower surface (17) is permeable on a macroscopic scale, such that all types of crude isolates can be further collected.

Preferably, the feed-through of the system of the invention comprises a feeder (10) for introducing the biological material, a main body (16) which is at least partially placed inside the microwave oven, and an outlet (14) for disposing of the biological material after passage through the microwave oven.

Preferably, the feed-through (18) comprises an active transport mechanism (11) which can be selected from an automated endless screw, a conveyer belt, etc.

In the case of isolation from dried products, a steam generator (13) may be placed inside the main body of the feed-through (18) or may be placed externally and connected to the inside of the feed-through via a connecting tube (15).

The system is also provided with a funnel (12) placed under the microwave oven in order to collect the crude isolates which, under gravity, fall through the permeable membrane of the feed-through. A receiving flask (8) is connected to the funnel (12).A cooling system (5) such as a condenser, is placed above the receiving flask.

The system may be used under atmospheric pressure, under vacuum or under pressure. The system is particularly useful in that it allows the continuous isolation of natural products from biological materials, and is particularly suitable for obtaining essential oils.

A typical processing method using the system of the invention includes the step of feeding the biological material into the system via a feeder (10). The biological material is then transported through the microwave oven (3) where it undergoes microwave irradiation. The crude isolates which are obtained by hydrodiffusion are then allowed to seep through the permeable membrane (17) by gravity and be collected into a receiving flask (8). The transport mechanism (11) allows the biological material to travel through the microwave oven and upon exiting the microwave oven, the processed biological materials can be disposed of via an outlet (14).

It is also conceivable that the outlet (14) may be reconnected to the feeder such that a second cycle using the same biological material may be carried out.

This continuous system provides an efficient way to obtain compounds by hydrodiffusion. As described above, the compounds obtained by the present invention may be used in a wide range of application.

The present invention is further illustrated hereinafter with the following examples which are not to be considered as limiting the scope of the invention.

### Examples

### Example 1 : Isolation of essential oils from fresh plants using microwave hydrodiffusion

Orange peels were placed in an apparatus according to the invention and subjected to microwave irradiation. After an extraction time of 5-10 minutes, the yield of essential oils obtained with the present microwave hydrodiffusion method at atmospheric or reduced pressure was equal to that obtained by conventional distillation methods after 180 minutes.

One of the greatest advantages of the present microwave hydrodiffusion method is its rapidity.

### Example 2 : Isolation of essential oils from dry plants using microwave hydrodiffusion

Dry lavender flowers were placed in an apparatus according to the invention and subjected to microwave irradiation. Steam was provided by an *in situ* or by an external steam generator during extraction. The yield of essential oils obtained with the present microwave hydrodiffusion method was comparable to that obtained by conventional distillation methods. The time of extraction was between 5 and 10 minutes.

### Example 3 : Isolation of phytochemicals from grape berries using microwave hydrodiffusion.

Grape berries were placed in the apparatus of the present invention and subjected to microwave irradiation. The crude juice was collected into a receiving flask in only 10 minutes. The present process favours the release of compounds trapped inside the cells as polyphenols.

In this way, the invention provides a method which enables a high increase in the extraction of phenolic components and tannins in very short time.

### Example 4 : Isolation of phytochemicals from tomatoes using microwave hydrodiffusion.

Tomatoes were placed in an apparatus according to the invention and subjected to microwave irradiation. Phytochemical crude isolates (150mL) were collected into a receiving flask in only 10 minutes. The phytochemical crude extract could be treated either by liquid-liquid extraction, solid-phase extraction etc. for analysis or enrichment purposes.

### Example 5 : Continuous isolation of essential oils.

Oranges and/or lavender were fed into a system according to the present invention at a rate varying from between 10 to 1000 Kg per hour. The yield of essential oil obtained from orange peels and/or lavender ranged between 0.1 to 5%. The present invention provided a substantial saving of time and energy.

## Claims

1. Method for isolating natural products from biological material comprising the step of
a. Subjecting the biological material to microwave irradiation in a microwave oven (3), **characterised by** the following steps:
b. Allowing the isolates from said biological material to drop by gravity out of the microwave oven (3) through a condenser (5) connected into a receiving flask (8),
c. Collecting the isolates in the receiving flask (8).

2. Method according to claim 1, wherein the isolates are further processed.

3. Method according to claims 1 or 2, wherein the biological material is selected from plants, spices, food products and seeds.

4. Method according to any of claims 1 to 3, wherein the natural products are selected from antioxidants, phytochemicals, colorants, essential oils, antimicrobials and vitamins.

5. Method according to any of claims 1 to 4, said method being carried out at atmospheric pressure, under reduced pressure or under pressure.

6. Method according to any of claims 1 to 5, wherein the pressure is varied during the isolation.

7. Method according to any of claims 1 to 6, wherein the temperature of isolation is between 40°C and 200°C, preferably between 50°C and 100°C.

8. Method according to any of claims 1 to 7, wherein the biological material is dry or contains moisture.

9. Method according to claim 8, wherein steam is brought in contact with the dry biological material.

10. Method according to claim 9, wherein the steam is produced by an *in situ* steam generator (13).

11. Method according to claim 10, wherein the steam is generated from cotton or water.

12. Apparatus for isolating natural products from biological material comprising a microwave oven (3) comprising a flask (1) for containing the biological material, said flask (1) having a filter (2) and at least one opening facing downwards (9) such that the filter is above said opening, the microwave oven being such that an opening (4) on its lower side allows the opening (9) of the flask (1) to extend from inside the oven to outside **characterised in that**, the opening (9) is connected to a condenser (5), which is connected to a receiving flask (8) for collecting said natural products from the biological material.

13. Apparatus according to claim 12, said apparatus comprising a connector (6) placed between the condenser (5) and the receiving flask (8), said connector being provided with a side opening comprising a valve (7).

14. Apparatus according to claim 13, wherein the side opening valve (7) of the connector is open to atmospheric pressure.

15. Apparatus according to claim 13, wherein the side opening of the connector (6) is connected to a vacuum pump.

16. Apparatus according to any of claims 12 to 15, wherein the flask (1) comprises an *in situ* steam generator (13).

17. Apparatus according to any of claims 12 to 15, wherein the microwave oven (3) comprises an *in situ* steam generator (13) connected to the flask (1) *via* a connecting tube (15).

18. Apparatus according to any of claims 12 to 15, wherein an external steam generator (13) is connected to the flask (1) *via* a connecting tube (15).

19. Apparatus according to any of claims 16 to 18, adapted to generate steam from cotton or water.

20. Apparatus for the continuous isolation of natural products from biological material by microwave irradiation comprising a microwave oven (3), a feed-through (18) comprising an active transport mechanism (11) for transporting the biological material through the microwave oven (3) a funnel (12) placed under the microwave oven, and a cooling system (5) connected to a receiving flask (8) which are placed under the funnel (12), said feed-through having a main body (16) having a lower surface (17) which, in the microwave oven (3), is permeable to the isolates of said biological material, in order to allow the isolates to drop out of the microwave oven through the funnel and the cooling system (5) into the receiving flask (8).

21. Apparatus according to claim 20, wherein the lower surface (17) of the feed-through in the microwave oven is permeable to said isolates on a macroscopic scale.

22. Apparatus according to any of claims 20 or 21, wherein the feed-through (18) comprises a feeder (10) for introducing the biological material, a main body (16) at least partially placed inside the microwave oven and an outlet (14) for disposing of the biological material after passage through the microwave oven (3).

23. Apparatus according to any of claims 20 to 22, wherein the active transport mechanism (11) is an automated endless screw or a conveyor belt.

24. Apparatus according to any of claims 20 to 23, which comprises an *in situ* steam generator (13) placed inside the feed-through (18) or placed externally from the feed-through and connected to the inside of the feed-through via a connecting tube (15).

25. Apparatus according to any of claims 20 to 24, wherein the apparatus is adapted to be at atmospheric pressure, under vacuum or under pressure.

26. Apparatus according to any of claims 20 to 25, for the isolation of essential oils from biological material.

## Patentansprüche

1. Verfahren zum Isolieren von Naturprodukten aus biologischem Material, aufweisend den Schritt
a) des Aussetzens des biologischen Materials einer Mikrowellenbestrahlung in einem Mikrowellenofen (3),
**gekennzeichnet durch**
die folgenden Schritte:
b) Ermöglichen, dass die Isolate aus dem biologischen Material **durch** Schwerkraft aus dem Mikrowellenofen (3) heraus **durch** einen angeschlossenen Kondenser (5) in einen Aufnahmebehälter bzw. -kolben (8) hinein fallen,
c) Sammeln der Isolate in dem Aufnahmekolben (8).

2. Verfahren nach Anspruch 1, wobei die Isolate weiter verarbeitet werden.

3. Verfahren nach Anspruch 1 oder 2, wobei das biologische Material aus Pflanzen, Gewürzen, Nahrungsmittelprodukten und Samen ausgewählt wird.

4. Verfahren nach einem der Ansprüche 1 bis 3, wobei die Naturprodukte aus Antioxidantien, Phytochemikalien, Farbstoffen, ätherischen Ölen, antimikrobiellen Stoffen und Vitaminen ausgewählt werden.

5. Verfahren nach einem der Ansprüche 1 bis 4, wobei es bei atmosphärischem Druck, bei reduziertem Druck oder unter Druck ausgeführt wird.

6. Verfahren nach einem der Ansprüche 1 bis 5, wobei der Druck während des Isolierens verändert wird.

7. Verfahren nach einem der Ansprüche 1 bis 6, wobei die Isoliertemperatur zwischen 40°C und 200°C, vorzugsweise zwischen 50°C und 100°C liegt.

8. Verfahren nach einem der Ansprüche 1 bis 7, wobei das biologische Material trocken ist oder Feuchtigkeit enthält.

9. Verfahren nach Anspruch 8, wobei Dampf mit dem trocknen biologischen Material in Kontakt gebracht wird.

10. Verfahren nach Anspruch 9, wobei der Dampf durch einen lokalen Dampfgenerator (13) erzeugt wird.

11. Verfahren nach Anspruch 10, wobei der Dampf aus Baumwolle oder Wasser erzeugt wird.

12. Vorrichtung zum Isolieren von Naturprodukten aus biologischem Material, umfassend
einen Mikrowellenofen (3) mit einem Behälter bzw. Kolben (1) zur Aufnahme des biologischen Materials, wobei der Kolben (1) ein Filter (2) und zumindest eine Öffnung (9) aufweist, die derart nach unten weist, dass das Filter oberhalb der Öffnung vorgesehen ist,
wobei der Mikrowellenofen so vorgesehen ist, dass eine Öffnung (4) in seiner Unterseite der Öffnung (9) des Kolbens (1) ermöglicht, sich von der Innenseite des Ofens zur Außenseite zu erstrecken,
**dadurch gekennzeichnet,**
**dass** die Öffnung (9) mit einem Kondenser (5) verbunden ist, der mit einem Aufnahmebehälter bzw. -kolben (8) zum Sammeln der Naturprodukte aus dem biologischen Material verbunden ist.

13. Vorrichtung nach Anspruch 12, wobei sie ein Verbindungsstück (6) aufweist, das zwischen dem Kondenser (5) und dem Aufnahmekolben (8) angeordnet ist, wobei das Verbindungsstück mit einer ein Ventil (7) enthaltenden Seitenöffnung versehen ist.

14. Vorrichtung nach Anspruch 13, wobei das Seitenöffnungsventil (7) des Verbindungsstücks zu atmosphärischem Druck hin offen ist.

15. Vorrichtung nach Anspruch 13, wobei die Seitenöffnung des Verbindungsstücks (6) mit einer Unterdruckpumpe verbunden ist.

16. Vorrichtung nach einem der Ansprüche 12 bis 15, wobei der Kolben (1) einen lokalen Dampfgenerator (13) umfasst.

17. Vorrichtung nach einem der Ansprüche 12 bis 15, wobei der Mikrowellenofen (3) einen lokalen Dampfgenerator (13) umfasst, der mittels eines Verbindungsrohres (15) mit dem Kolben (1) verbunden ist.

18. Vorrichtung nach einem der Ansprüche 12 bis 15, wobei ein externer Dampfgenerator (13) mittels eines Verbindungsrohres (15) mit dem Kolben (1) verbunden ist.

19. Vorrichtung nach einem der Ansprüche 16 bis 18, wobei sie geeignet ist für die Erzeugung von Dampf aus Baumwolle oder Wasser.

20. Vorrichtung zum kontinuierlichen Isolieren von Naturprodukten aus biologischem Material durch Mikrowellenbestrahlung, umfassend
einen Mikrowellenofen (3),
eine Zuführeinrichtung (18) mit einem aktiven Transportmechanismus (11) zum Transportieren des biologischen Materials durch den Mikrowellenofen (3),
einen Trichter (12), der unter dem Mikrowellenofen angeordnet ist,
und ein Kühlsystem (5), welches mit einem Aufnahmebehälter bzw. -kolben (8) verbunden und mit diesem unter dem Trichter (12) angeordnet ist,
wobei die Zuführeinrichtung einen Hauptkörper (16) mit einer Unterseite (17) aufweist, die in dem Mikrowellenofen (3) für die Isolate aus dem biologischen Material durchlässig ist, um den Isolaten zu ermöglichen, aus dem Mikrowellenofen heraus durch den Trichter und das Kühlsystem (5) in den Aufnahmekolben (8) hinein zu fallen.

21. Vorrichtung nach Anspruch 20, wobei die Unterseite (17) der Zuführeinrichtung in dem Mikrowellenofen für die Isolate in einem makroskopischen Maßstab durchlässig ist.

22. Vorrichtung nach Anspruch 20 oder 21, wobei die Zuführeinrichtung (18) eine Einführeinrichtung (10) zum Einführen des biologischen Materials, einen Hauptkörper (16), der zumindest teilweise innerhalb des Mikrowellenofens angeordnet ist, und einen Auslass (14) für eine Abgabe des biologischen Materials nach Durchgang durch den Mikrowellenofen (3) umfasst.

23. Vorrichtung nach einem Ansprüche 20 bis 22, wobei der aktive Transportmechanismus (11) ein automatisierter Schneckenantrieb oder ein Förderband ist.

24. Vorrichtung nach einem der Ansprüche 20 bis 23, umfassend einen lokalen Dampfgenerator (13), der innerhalb der Zuführeinrichtung (18) angeordnet ist oder der außerhalb der Zuführeinrichtung angeordnet und mit deren Innenseite mittels eines Verbindungsrohres (15) verbunden ist.

25. Vorrichtung nach einem der Ansprüche 20 bis 24, wobei sie geeignet ist für einen Einsatz bei atmosphärischem Druck, bei Unterdruck oder unter Druck.

26. Vorrichtung nach einem der Ansprüche 20 bis 25 zum Isolieren von ätherischen Ölen aus biologischem Material.

## Revendications

1. Procédé de séparation de produits naturels d'un matériau biologique, ledit procédé comprenant l'étape consistant à :
a. soumettre le matériau biologique à un rayonnement micro-onde dans un four à micro-ondes (3),
**caractérisé par** les étapes suivantes consistant à :
b. laisser les produits séparés dudit matériau biologique s'écouler par gravité à l'extérieur du four à micro-ondes (3) en passant par un réfrigérant (5) raccordé à un flacon de réception (8),
c. collecter les produits séparés dans le flacon de réception (8).

2. Procédé selon la revendication 1, dans lequel les produits séparés sont soumis à un traitement ultérieur.

3. Procédé selon l'une des revendications 1 et 2, dans lequel le matériau biologique est sélectionné parmi des plantes, des épices, des produits alimentaires et des graines.

4. Procédé selon l'une quelconque des revendications 1 à 3, dans lequel les produits naturels sont sélectionnés parmi des antioxydants, des produits phytochimiques, des colorants, des huiles essentielles, des antimicrobiens et des vitamines.

5. Procédé selon l'une quelconque des revendications 1 à 4, ledit procédé étant mis en oeuvre à pression atmosphérique, sous pression réduite ou sous pression.

6. Procédé selon l'une quelconque des revendications 1 à 5, dans lequel on fait varier la pression pendant la séparation.

7. Procédé selon l'une quelconque des revendications 1 à 6, dans lequel la température de séparation est comprise entre 40°C de 200°C, de préférence entre 50°C et 100°C.

8. Procédé selon l'une quelconque des revendications 1 à 7, dans lequel le matériau biologique est sec ou contient de l'humidité.

9. Procédé selon la revendication 8, dans lequel de la vapeur est mise en contact avec le matériau biologique sec.

10. Procédé selon la revendication 9, dans lequel la vapeur est produite par un générateur de vapeur *in situ* (13).

11. Procédé selon la revendication 10, dans lequel la vapeur est générée à partir de coton ou d'eau.

12. Appareil de séparation de produits naturels d'un matériau biologique, ledit appareil comprenant un four à micro-ondes (3) comportant un flacon (1) destiné à contenir le matériau biologique, ledit flacon (1) possédant un filtre (2) et au moins une ouverture (9) dirigée vers le bas de sorte que le filtre est situé au-dessus de ladite ouverture, le four à micro-ondes étant tel qu'une ouverture (4) ménagée sur son côté inférieur permet de prolonger l'ouverture (9) du flacon (1) depuis l'intérieur du four vers l'extérieur,
**caractérisé en ce que** l'ouverture (9) est raccordée à un réfrigérant (5), qui est raccordé à un flacon de réception (8) destiné à collecter lesdits produits naturels provenant du matériau biologique.

13. Appareil selon la revendication 12, ledit appareil comprenant un connecteur (6) placé entre le réfrigérant (5) et le flacon de réception (8), ledit connecteur étant doté d'une ouverture latérale comprenant un clapet (7).

14. Appareil selon la revendication 13, dans lequel le clapet d'ouverture latérale (7) du réfrigérant est ouvert à la pression atmosphérique.

15. Appareil selon la revendication 13, dans lequel l'ouverture latérale du réfrigérant (6) est raccordée à une pompe à vide.

16. Appareil selon l'une quelconque des revendications 12 à 15, dans lequel le flacon (1) comprend un générateur de vapeur *in situ* (13).

17. Appareil selon l'une quelconque des revendications 12 à 15, dans lequel le four à micro-ondes (3) comprend un générateur de vapeur *in situ* (13) raccordé au flacon (1) via un tube de raccordement (15).

18. Appareil selon l'une quelconque des revendications 12 à 15, dans lequel un générateur de vapeur externe (13) est raccordé au flacon (1) via un tube de raccordement (15).

19. Appareil selon l'une quelconque des revendications 16 à 18, adapté pour générer de la vapeur à partir de coton ou d'eau.

20. Appareil destiné à la séparation continue de produits naturels d'un matériau biologique par rayonnement micro-onde, ledit appareil comprenant un four à micro-ondes (3), une traversée (18) comprenant un mécanisme de transport actif (11) destiné à transporter le matériau biologique à travers le four à micro-ondes (3), un entonnoir (12) placé sous le four à micro-ondes et un système de refroidissement (5) raccordé à un flacon de réception (8), lesquels sont placés sous l'entonnoir (12), ladite traversée possédant un corps principal (16) présentant une surface inférieure (17) qui, dans le four à micro-ondes (3), est perméable aux produits séparés dudit matériau biologique, afin de laisser les produits séparés s'égoutter du four à micro-ondes dans le flacon de réception (8), en passant par l'entonnoir et le système de refroidissement (5).

21. Appareil selon la revendication 20, dans lequel la surface inférieure (17) de la traversée du four à micro-ondes est perméable auxdits produits séparés à une échelle macroscopique.

22. Appareil selon l'une des revendications 20 et 21, dans lequel la traversée (18) comprend un dispositif d'alimentation (10) destiné à introduire le matériau biologique, un corps principal (16) placé au moins partiellement à l'intérieur du four à micro-ondes et une sortie (14) destinée à évacuer le matériau biologique après le passage à travers le four à micro-ondes (3).

23. Appareil selon l'une quelconque des revendications 20 à 22, dans lequel le mécanisme de transport actif (11) est une vis sans fin motorisée ou une bande de transporteuse.

24. Appareil selon l'une quelconque des revendications 20 à 23, lequel comprend un générateur de vapeur *in situ* (13) placé à l'intérieur de la traversée (18) ou placé à l'extérieur de la traversée et raccordée à l'intérieur de la traversée via un tube de raccordement (15).

25. Appareil selon l'une quelconque des revendications 20 à 24, dans lequel l'appareil est adapté pour être à pression atmosphérique, sous vide ou sous pression.

26. Appareil selon l'une quelconque des revendications 20 à 25, destiné à séparer des huiles essentielles d'un matériau biologique.
